# DEMANDE DE BREVET EUROPEEN

(11) **EP 4 772 839 A2**
(43) Date de publication de la demande: **08.07.2026**
(21) Numéro de dépôt: 25226174.8
(22) Date de dépôt: 22.12.2025
(51) Int. Cl.: G01D 5/14, G01D 5/245, G01D 5/20, G01D 7/00, G05G 5/06, G05G 5/03, G05G 1/10, G06F 3/01, G06F 3/0362

(54) **CODEUR MAGNÉTIQUE INCRÉMENTAL**

(30) Priorité: 24.12.2024 FR 2415218
(71) Demandeur: THALES, 92190 Meudon (FR)
(72) Inventeur: BESNARD, Mathieu, 33700 MERIGNAC (FR); SANSON, Frédéric, 33700 MERIGNAC (FR)
(74) Mandataire: Lavoix

(57) **Abrégé**

La présente invention concerne un codeur magnétique incrémental (10) comprenant un corps fixe et un corps mobile.

L'un des corps, dit premier corps (21), comprend :
- une première composante dentée s'étendant selon une direction longitudinale et une direction circonférentielle, l'une desdites directions correspondant une première direction de codage ;
l'autre corps, dit deuxième corps (22), comprend :
- une deuxième composante dentée définissant une dent faite en matériau magnétique ou ferromagnétique et disposée en regard de dents de la première composante dentée ;
- une paire de bobines magnétiques configurée pour mesurer chaque variation d'inductance entre la première composante dentée et la deuxième composante dentée, pour quantifier chaque mouvement du corps mobile selon la première direction de codage.

## Description

### DOMAINE DE L'INVENTION

La présente invention concerne un codeur magnétique incrémental.

Plus particulièrement, la présente invention concerne un codeur apte à fournir des signaux logiques binaires représentant des incréments de position relative de deux éléments du codeur, les deux éléments étant mobiles l'un par rapport à l'autre. Avantageusement, un tel codeur est applicable dans le domaine aéronautique, par exemple dans un cockpit de pilotage d'un aéronef.

Typiquement, dans une application pour des équipements aéronautiques, on peut utiliser un codeur angulaire et/ou linéaire pour indiquer à un calculateur de pilotage automatique une consigne d'altitude ou de vitesse que l'opérateur choisit en actionnant un bouton de commande du codeur. La fiabilité du codeur et des informations qu'il délivre est alors un élément essentiel du codeur. Le besoin typique pour un codeur aéronautique peut comprendre un ou plusieurs des éléments suivants : compacité, capacité d'effectuer des multi-tours en rotation et/ou une course linéaire, capacité d'incrémentation et de crantage, etc. Afin de permettre sa certification, le codeur aéronautique doit également pouvoir répondre à des niveaux de sécurité DAL (de l'anglais « *Design Assurance Level* ») élevés, notamment au niveau DAL A.

En particulier, en ce qui concerne la compacité, un codeur présente typiquement un bouton de commande de diamètre entre 10 à 100 mm et de longueur entre 5 et 50 mm (typiquement Ø 16 mm x Ig 16 mm) et un corps de diamètre entre 10 à 100 mm et de longueur entre 5 et 100 mm (typiquement Ø 25 mm x Ig 50 mm) caché derrière le panneau de fixation ou fixé devant ce panneau. Dans ce dernier cas, le bouton englobe le corps du codeur qui est fixé sur le panneau et permet d'être placé autour, voire légèrement en chevauchement d'un moniteur ou écran.

En ce que concerne la capacité d'incrémentation, chaque passage de cran (ou pas) constitue un incrément d'une unité de comptage de la rotation ou de la translation. La résolution angulaire ou linéaire est définie pas le pas (ou cran). Le nombre de pas par tour est de l'ordre de 1 à 32 pas (typiquement 12 pas). Le nombre de pas en translation est de 1 à 10 crans (typiquement 1 cran dans chaque direction pour obtenir un bouton « push/pull » avec un état stable entre les deux crans).

Pour détecter le sens du mouvement en rotation et/ou en translation, le codeur dispose généralement d'au moins deux détecteurs (respectivement pour la rotation et la translation) décalés physiquement entre eux (typiquement un nombre impair de quart de pas). Ces deux détecteurs permettent l'encodage du mouvement en rotation et/ou en translation sur deux bits. Ainsi, l'encodage donne les valeurs successives suivantes : 00, 01, 11, 10 lorsque le codeur tourne et/ou translate dans un sens et les valeurs successives suivantes : 00, 10, 11, 01 lorsque le codeur tourne et/ou translate dans l'autre sens. Il est donc possible de déterminer non seulement l'apparition d'un incrément en rotation et/ou en translation (changement d'état de l'un des bits) mais aussi le sens de rotation (par comparaison entre un état détecté et l'état immédiatement antérieur).

En ce qui concerne la capacité de crantage des codeurs, le passage de cran encodé entraîne généralement un retour tactile qu'un opérateur doit ressentir lors de la manœuvre du dispositif. Le couple de crantage angulaire peut par exemple être de l'ordre de 1 à 700 mN.m (typiquement 12 mN.m) et l'effort de crantage linéaire de l'ordre de 0,5 à 20 N (typiquement 6 N).

Les codeurs les plus complexes disposent d'encodage et de crantage en rotation et en translation. L'encodage et le crantage en rotation ne doivent pas être bloqués par ceux en translation. Dans ce cas, la détection et le crantage en rotation et en translation doivent pouvoir être utilisés simultanément sans perte de performance. Par exemple, pour saisir une vitesse, le pilote devra simultanément pousser le bouton du codeur et le tourner jusqu'à la valeur choisie.

Enfin, dans certain cas, pour sécuriser le codeur et notamment pour garantir son niveau de sécurité DAL (par exemple DAL A), les fonctions de détection (ou d'encodage) sont au moins doublées.

### ÉTAT DE LA TECHNIQUE

Pour répondre aux besoins précités, les codeurs utilisés dans les applications aéronautiques sont souvent basés sur des solutions opto-mécaniques (détection optique et crantage mécanique) ou électromécanique (détection par contact électrique et crantage mécanique) et parfois magnéto-mécanique (détection magnétique et crantage mécanique) ou opto-magnétique ou même purement magnétique.

Par exemple, des codeurs opto-mécaniques sont décrits dans les documents FR 2937129 et FR 2954491. Selon ces documents, la détection en rotation et/ou en translation (encodage) est faite par un codeur optique alors que le maintien en position stable (crantage) est assuré mécaniquement par au moins une bille mise en pression par un ressort sur un chemin de bille (ou came). Même si ces dernières innovations répondent aux besoins décrits ci-dessus et visent à simplifier leur réalisation, ces codeurs opto-mécaniques et électromécaniques demeurent des assemblages complexes constitués de nombreuses pièces de grande précision.

Plus généralement, les solutions actuelles à crantage mécanique génèrent de la friction (exemple : bille contre came) et de l'usure ce qui limite la durée de vie du dispositif, notamment lorsque des pièces en plastique sont utilisées. Dans les codeurs électromécaniques, la détection et le crantage sont parfois liés par au moins une pièce mécanique commune qui sert à la fois au click et à la détection via un contact électrique. Ce dernier est souvent exposé au risque d'usure, de « fretting corrosion » (corrosion de contact) et limite la durée de vie du dispositif. De plus, dans les dispositifs opto-mécaniques et parfois électromécaniques, la détection et le crantage sont découplés, c'est-à-dire qu'ils résultent de solution et/ou phénomène différents et sont assez éloignés physiquement. Ce découplage augmente le nombre de pièces et par conséquent, le risque de décalage entre la détection et le crantage. Dans le cas de codeur complexe et sécurisé, le nombre de pièces est encore plus important. Dans ce cas, pour assurer une bonne performance et fiabilité, les codeurs complexes actuels requièrent des pièces de grande précision qui sont plus couteuses.

On connait également le document FR 2370350 qui décrit un codeur magnétique rotatif à aimants mobiles dans lequel le crantage et l'encodage sont issus du phénomène magnétique. Toutefois, le codeur de ce document est uniquement rotatif et utilise des aimants mobiles qui sont exposés à des risques de frottement et de coincement.

En résumé, les solutions électromécaniques présentent le plus fort risque de fatigue tant au niveau du crantage que de l'encodage car elles génèrent le plus de frottement. Par ailleurs, l'encodage électrique est exposé à la corrosion de contact (« fretting corrosion »). Ces inconvénients diminuent la fiabilité et limitent la durée de vie du dispositif.

Les solutions opto-mécaniques et magnéto-mécaniques conservent le risque de fatigue au niveau du crantage mécanique.

Les solutions opto-magnétiques utilisent des phénomènes sans contact différents. Ces solutions sont plus encombrantes si on souhaite faire un codeur plus complexe (exemple : codeur rotatif avec « push/pull ») et sécurisé.

On connait enfin le document FR 3135791 proposant une solution purement magnétique permettant de mettre en œuvre un codage selon l'une des directions choisies, par exemple parmi la direction de translation et la direction de rotation, tout en assurant un crantage selon la même direction. Selon ce document, le codage et le crantage sont créés par le même effet magnétique entre le corps mobile et le corps fixe. Ainsi, ce document permet de résoudre l'ensemble des problématiques précitées. Toutefois, la solution proposée par ce document peut encore être améliorée notamment en termes d'encombrement et de fiabilité.

### RÉSUMÉ DE L'INVENTION

La présente invention a pour but de proposer un codeur incrémental répondant à l'ensemble des besoins précités, tout en améliorant la solution proposée notamment par le document FR 3135791, notamment en termes d'encombrement et de fiabilité.

À cet effet, l'invention concerne un codeur magnétique incrémental définissant un axe de codeur et comprenant un corps fixe et un corps mobile par rapport au corps fixe selon au moins une première direction de codage ;
l'un des corps, dit premier corps, comprenant :
   - une première composante dentée s'étendant selon une direction longitudinale confondue avec l'axe de codeur et une direction circonférentielle perpendiculaire à la direction longitudinale, l'une desdites directions correspondant à la première direction de codage, la première composante dentée définissant une pluralité de dents faites en matériau magnétique ou ferromagnétique et disposées selon la première direction de codage ;
l'autre corps, dit deuxième corps, comprenant :
   - une deuxième composante dentée s'étendant selon la direction longitudinale et la direction circonférentielle, la deuxième composante dentée définissant une dent faite en matériau magnétique ou ferromagnétique et disposée en regard des dents de la première composante dentée lors de chaque déplacement du corps mobile selon la première direction de codage ;
   - au moins une paire de bobines magnétiques configurée pour mesurer chaque variation d'inductance entre la première composante dentée et la deuxième composante dentée, pour quantifier chaque mouvement du corps mobile selon la première direction de codage.

Muni de ces caractéristiques, le codeur selon l'invention permet en effet de mettre en œuvre un codage selon au moins l'une des directions choisies, par exemple parmi la direction de translation et la direction de rotation, sans utilisation de capteur spécifique. En effet, selon l'invention, l'utilisation des dents en matériau magnétique ou ferromagnétique permet de varier l'inductance lors du mouvement du corps mobile par rapport au corps fixe. Cette variation est détectable par les bobines magnétiques qui assurent donc la fonction des capteurs magnétiques classiquement utilisés dans les codeurs fonctionnant à l'effet magnétique. Les bobines magnétiques peuvent être utilisées en outre pour assurer une fonction supplémentaire, telle qu'un couple et/ou effort de crantage. Ainsi, le nombre et l'encombrement des éléments internes du codeur peuvent être sensiblement réduits.

En outre, l'arrangement respectif du corps mobile et du corps fixe peut être choisi de sorte à minimiser leur contact mécanique. Par exemple, les éléments détaillés ci-dessus du corps fixe et du corps mobile ne présentent aucun contact mécanique entre eux. Ainsi, ces éléments fonctionnent sans friction et sans usure mécanique prématurée. Cela garantit donc la fiabilité à l'usage du codeur et rallonge considérablement sa durée de vie même lorsque des pièces en plastique sont utilisées. De plus, ces éléments sont en nombre limité ce qui permet de les disposer facilement au sein des corps correspondants. Cela fait alors le montage du codeur particulièrement simple et diminue les risques de blocage et de décalage de différentes pièces entre elles.

Il est par ailleurs clair qu'aucune des composantes dentées ne présente une alternance magnétique selon la première direction de codage.

Selon d'autres modes avantageux de l'invention, le codeur magnétique comprend une ou plusieurs caractéristiques suivantes, prises isolément ou suivant toutes les combinaisons techniquement possibles :
- les dents de la première composante dentées sont disposées selon la première direction de codage selon un pas constant ;
- la première direction de codage correspond à la direction circonférentielle ;
- la deuxième composante dentée comprend une pluralité de dents disposées selon la direction circonférentielle en regard des dents de la première composante dentée de manière synchrone ou déphasée ;
- le corps mobile est mobile par rapport au corps fixe selon en outre une deuxième direction de codage perpendiculaire à la première direction de codage ;
- la première composante dentée définit en outre une pluralité de dents faites en matériau magnétique ou ferromagnétique et disposées selon la deuxième direction de codage ;
- la deuxième composante dentée définit une dent faite en matériau magnétique ou ferromagnétique et disposée en regard des dents de la première composante dentée lors de chaque déplacement du corps mobile selon la deuxième direction de codage ;
- au moins une paire de bobines magnétiques est configurée pour mesurer chaque variation d'inductance entre la première composante dentée et la deuxième composante dentée, pour quantifier chaque mouvement du corps mobile selon la deuxième direction de codage ;
- lequel la première composante dentée comprend une pluralité de roues dentées disposées selon l'axe de codeur ;
- les roues dentées sont espacées entre elles pour former une pluralité de dents selon l'axe de codeur ;
- la deuxième composante dentée comprend au moins une roue dentée disposée de manière coaxiale avec au moins une roue dentée de la première composante dentée au moins dans une position de repos du codeur ;
- le codeur comprend une pluralité de bobines magnétiques disposées de manière circonférentielle sur la roue dentée de la deuxième composante dentée ;
- chaque bobine magnétique s'étend autour d'une paire de dents formées par la roue dentée de la deuxième composante dentée ;
- la deuxième composante dentée comprend au moins deux roues dentées disposées le long de l'axe de codeur ;
- au moins une bobine magnétique est disposée entre lesdites roues dentées de la deuxième composante dentée et s'étend autour de l'axe de codeur ;
- le codeur comprenant au moins deux premières composantes dentées disposées selon l'axe de codeur et au moins deux deuxièmes composantes dentées disposées de manière coaxiale avec les premières composantes dentées ;
- chaque premier composante dentées comprend au moins une roue dentée ;
- les roues dentées correspondant à des composantes premières composantes dentées différentes sont déphasées d'un angle prédéterminé ;
- les bobines magnétiques sont configurées pour être alimentées lors du fonctionnement du codeur, pour créer un couple ou un effort de crantage entre la première composante dentée et la deuxième composante dentée lors de chaque mouvement respectif de ces composantes selon la première direction de codage et/ou une deuxième direction de codage ;
- les bobines magnétiques sont configurées pour être alimentées en fonction d'un contexte d'utilisation du codeur ou pour générer un retour haptique ;
- le nombre de crans selon une direction de codage est déterminé par le nombre de dents de la première composante dentée ou de la deuxième composante dentée selon cette direction de codage ;
- le codeur comprend en outre un ou plusieurs aimants permanents disposés pour renforcer le couple et/ou l'effort de crantage et/ou générer un couple et/ou un effort de retour.

Il est par ailleurs clair qu'aucune des composantes dentées ne présente une alternance magnétique selon la deuxième direction de codage. Autrement dit, aucune des composantes dentées ne présente une alternance magnétique selon la première direction de codage ni selon la deuxième direction de codage.

### DESCRIPTION DES FIGURES

Ces caractéristiques et avantages de l'invention apparaitront à la lecture de la description qui va suivre donnée uniquement à titre d'exemple et non limitatif, et faite en référence aux dessins annexés, sur lesquels :
- [Fig.1] la figure 1 est une vue schématique en perspective d'un codeur magnétique selon un premier mode de réalisation de l'invention, le codeur étant fixé partiellement derrière un panneau formant une planche de bord ;
- [Fig.2] la figure 2 est une vue en perspective éclatée du codeur de la figure 1, le codeur comprenant un corps fixe comprenant un stator et un corps mobile comprenant un rotor ;
- [Fig.3] la figure 3 présente une vue partielle d'une coupe selon le plan longitudinal III de la figure 1 ;
- [Fig.4] la figure 4 est une vue en perspective éclatée du stator et du rotor de la figure 2 ;
- [Fig.5] [Fig.6] les figures 5 et 6 sont des vues détaillées du rotor de la figure 2 ;
- [Fig.7] la figure 7 est une vue en perspective d'un élément du stator de la figure 2 ;
- [Fig.8] la figure 8 est un schéma expliquant le fonctionnement de l'élément de la figure 7 ;
- [Fig.9] la figure 9 est une vue analogue à celle de la figure 3 présentant des caractéristiques optionnelles du codeur de la figure 1 ;
- [Fig.10] la figure 10 est une vue analogue à celle de la figure 3 présentant un codeur magnétique selon un deuxième de réalisation de l'invention, le codeur comprenant un corps fixe comprenant un stator et un corps mobile comprenant un rotor ;
- [Fig.11] la figure 11 est une vue en perspective éclatée du stator et du rotor de la figure 10 ; et
- [Fig.12] [Fig.13] les figures 12 et 13 sont des vues détaillées du rotor de la figure 10 ;
- [Fig.14] la figure 14 est une vue en perspective d'un élément du stator de la figure 10 ;
- [Fig.15] la figure 15 est une vue analogue à celle de la figure 3 présentant des caractéristiques optionnelles du codeur de la figure 10 ; et
- [Fig.16] la figure 16 est une vue schématique d'une paires de roues dentées selon un mode de réalisation autre que ceux décrits en relation avec les figures précédentes.

### DESCRIPTION DÉTAILLÉE DE L'INVENTION

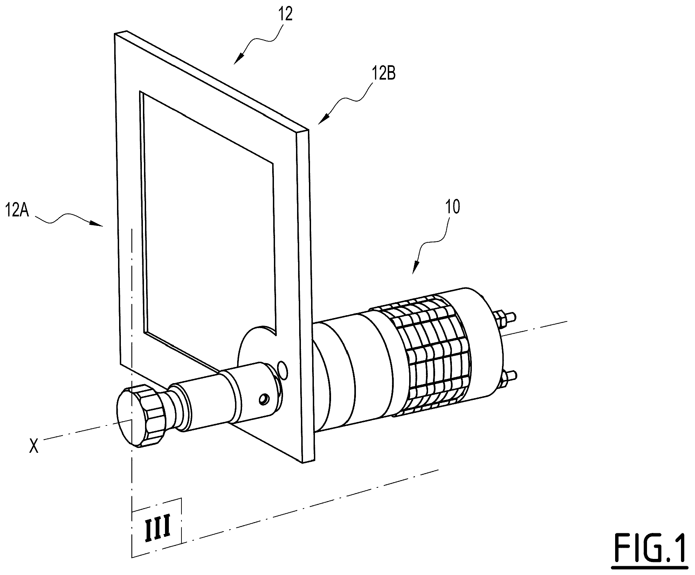

La figure 1 illustre en effet un codeur magnétique incrémental 10 selon un premier mode de réalisation de l'invention. De préférence, le codeur 10 est monté dans un cockpit permettant de piloter un aéronef.

Par « aéronef », on entend tout engin volant, tel qu'un avion, un hélicoptère ou un drone par exemple. Un tel aéronef peut être piloté directement à partir de celui-ci. Dans un tel cas le cockpit est avantageusement arrangé à l'intérieur de l'aéronef. Selon un autre exemple de réalisation, un tel aéronef est contrôlé à distance. Dans un tel cas, le cockpit est disposé à distance de l'aéronef et présente par exemple une station au sol. Dans tous les cas, l'aéronef est configuré pour être piloté par un opérateur, par exemple par un pilote à partir du cockpit disposé à l'intérieur de l'aéronef.

Selon l'invention, le codeur 10 permet à l'opérateur de contrôler au moins une fonctionnalité avionique. Par exemple, un tel codeur 10 peut être utilisé par l'opérateur pour contrôler un système avionique et fait partie d'un système de contrôle d'un tel système avionique. En variante, le codeur 10 fait partie d'un système de contrôle de plusieurs systèmes avioniques. Par exemple, le codeur 10 selon l'invention fait partie d'un système dit « Flight Control Unit » (FCU ou « unité de contrôle de vol » en français) ou « Integrated Standby Instrument System » (ISIS ou « système d'instruments de secours intégré » en français) ou « Closer Control Device » (CCD ou « dispositif de contrôle rapproché » en français) ou « Keyboard Cursor Control Device » (KCCD ou « dispositif de contrôle du curseur du clavier » en français), etc.

Dans l'exemple de la figure 1, le codeur 10 est intégré partiellement dans un panneau 12. Ce panneau 12 forme par exemple une planche de bord du cockpit de l'aéronef pour l'un des systèmes de contrôle précité. Dans l'exemple de la figure 1, le codeur 10 est arrangé partiellement dans la partie avant 12A du panneau 12 et partiellement dans la partie arrière 12B de ce panneau 12. En particulier, dans l'exemple de la figure 1, la partie avant 12A du panneau 12 est orientée vers l'opérateur alors que la partie arrière 12B de ce panneau est orientée vers la partie interne de la planche de bord. Bien entendu, d'autres exemples d'arrangement du codeur 10 par rapport au panneau 12 ou par rapport à tout autre moyen de fixation sont également possibles. En particulier, selon un autre mode de réalisation possible (non-illustré), le codeur 10 est disposé entièrement dans la partie avant 12A du panneau 12.

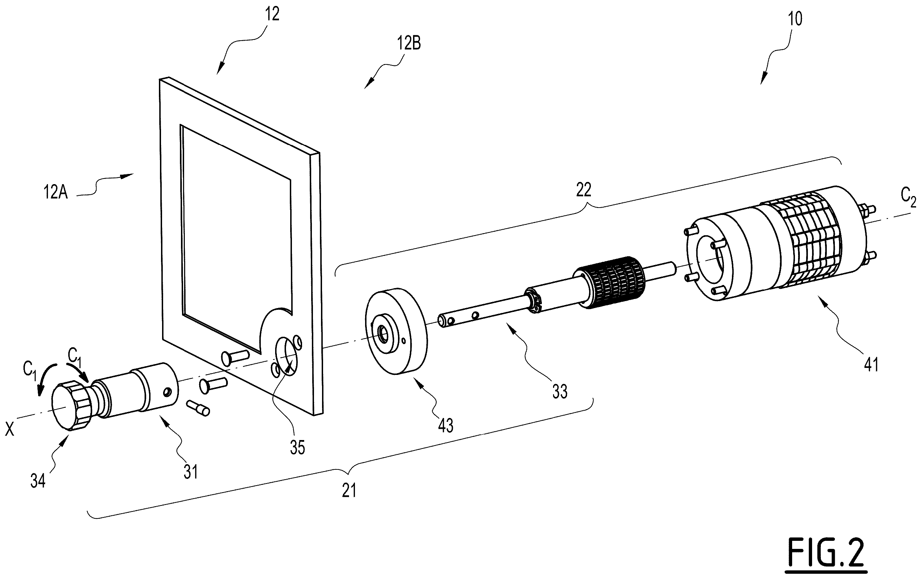

En référence à la figure 2, le codeur 10 comprend un corps mobile 21, appelé également dans l'exemple de cette figure premier corps, et un corps fixe 22, appelé également dans l'exemple de cette figure deuxième corps.

Le corps mobile 21 comprend un bouton 31 et un rotor 33.

Le bouton 31 fait saillie par rapport au panneau 12 et est arrangé dans la partie avant 12A de ce panneau 12. Le bouton 31 est mobile en translation le long d'un axe de codeur X et en rotation autour de l'axe de codeur X. Plus particulièrement, le bouton 31 est mobile selon une première direction de codage C1 qui correspond dans cet exemple à la direction de rotation autour de l'axe de codeur X et une deuxième direction de codage C2 qui correspond dans cet exemple à la direction de translation selon l'axe de codeur X. Avantageusement, le bouton 31 est mobile dans chaque sens selon chaque direction de codage C1, C2. En particulier, dans la direction de rotation, le bouton 31 est mobile en rotation dans le sens horaire et antihoraire, et dans la direction de translation, le bouton 31 est mobile dans le sens vers la planche de bord et vers l'opérateur. Avantageusement, le bouton 31 définit notamment une surface de bouton 34 qui est destinée à être orientée vers l'opérateur. Cette surface 34 représente donc une surface extérieure du bouton 31 qui est visible par l'opérateur et peut être saisie par l'opérateur.

Le rotor 33 s'étend selon l'axe de codeur X de sorte à former sur l'une de ses extrémités une liaison solidaire avec le bouton 31. Ainsi, tout comme le bouton 31, le rotor 33 est mobile selon la première direction de codage C1 et selon la deuxième direction de codage C2 dans chaque sens de mouvement précité. Le rotor 33 reçoit des éléments internes fonctionnels du corps mobile 21 qui seront expliqués plus en détail par la suite.

Le corps fixe 22 comprend un stator 41 et une flasque 43.

La flasque 43 est par exemple disposée dans un trou passant 35 du panneau 12 et permet de supporter le bouton 31 et le rotor 33. Dans l'exemple de la figure 2, la flasque 43 est fixée sur le panneau 12 tout en restant dans la partie arrière 12B de celui-ci, en utilisant par exemple des vis accessibles à partir de la partie avant 12B du panneau 12.

Le stator 41 reçoit et/ou comprend des éléments internes fonctionnels du corps fixe 22 qui sont destinés à coopérer avec les éléments internes fonctionnels du corps mobile 21 comme cela sera expliqué plus en détail par la suite. En particulier, et comme cela sera apparent par la suite, les éléments internes fonctionnels du corps fixe 22 sont maintenus par le stator 41 à distance par rapport à ceux du corps mobile 21. Pour ce faire, le stator 41 est configuré pour recevoir au moins partiellement le rotor 33 avec les éléments internes fonctionnels du corps mobile 21 portés par ce rotor 33. Selon un autre mode de réalisation (non-illustré), le rotor 33 est configuré pour recevoir au moins partiellement le stator 41 avec les éléments internes fonctionnels correspondants. Ce mode est par exemple utilisable lorsque le codeur 10 est disposé entièrement dans la partie avant 12A du panneau 12.

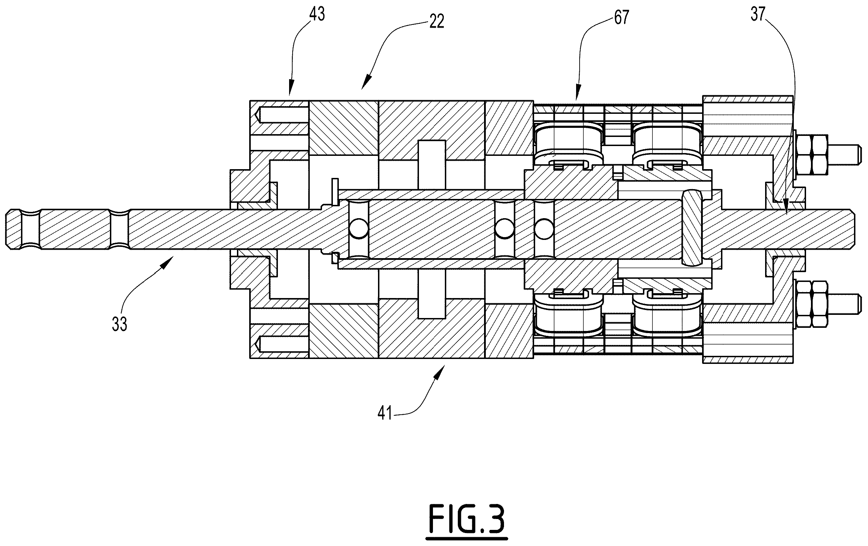

Le stator 41 est par exemple relié au corps mobile 21 via une liaison mobile dans chaque direction de codage. Cette liaison peut par exemple être formée à chaque extrémité du rotor 33 et présenter des paliers lisses, par exemple des paliers en polymère ou paliers bronze frittés. Ces paliers sont préférentiellement à collerette pour servir de butée mécanique selon les deux sens de déplacement du rotor 33 suivant l'axe de codeur X. Selon un autre exemple, ces paliers sont des paliers à élément roulant tel que douille à billes. La figure 3 fait notamment apparaitre les paliers 37 reliant le rotor 33 au deuxième corps 22. Dans l'exemple de cette figure, les paliers 37 relient une extrémité du rotor 33 directement au stator 41 et l'autre extrémité du rotor 33 au stator 41 via la flasque 43. Dans cet exemple, la flasque 43 est configurée pour coopérer avec le stator 41 afin de le fixer au panneau 12. Le stator 41 peut être constitué de plusieurs pièces empilées suivant l'axe de codeur X.

Par ailleurs, un capot peut être fourni pour protéger l'ensemble des composants du codeur 10 qui sont disposés dans la partie arrière 12B du panneau 12

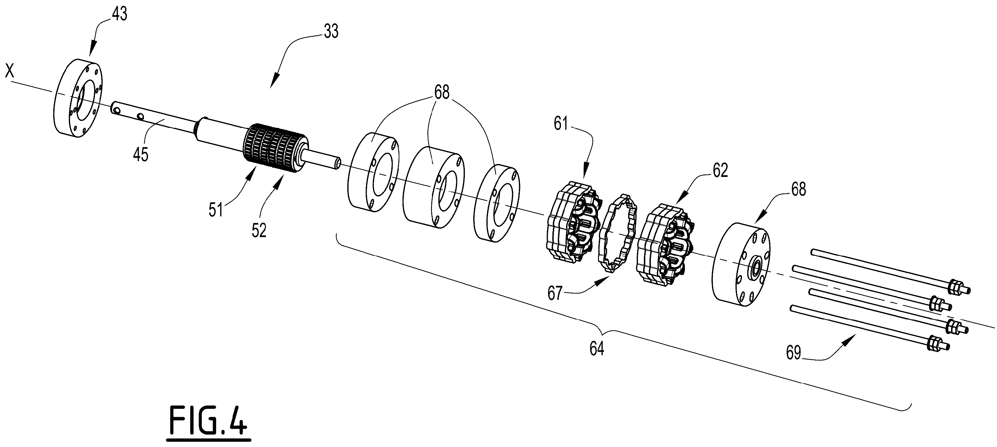

Dans l'exemple de la figures 4 illustrant plus en détail les éléments internes fonctionnels du corps fixe 22 et du corps mobile 21, le rotor 33 présente par exemple un arbre 45 de forme cylindrique s'étendant selon l'axe de codeur X.

En référence aux figures 4 à 6, les éléments internes fonctionnels du corps mobile 21 comprennent au moins deux composantes dentées rotoriques 51, 52. Chacune de ces composantes 51, 52 est fixée sur l'arbre 45 le long de l'axe de codeur X et reste espacée de l'autre composante 51, 52 d'une distance d. Dans certains modes de réalisation, les composantes dentées rotoriques 51, 52 sont fixés sur l'arbre 45, grâce à une entretoise 53 et un circlip ou anneau élastique. L'anti rotation des composantes 51, 52 peut être assurée par des clavettes ou des goupilles. L'arbre 45 et l'entretoise 53 sont préférentiellement réalisés dans un matériaux non magnétique (exemple : alliage de bronze) pour éviter les fuites magnétiques.

Chacune des composantes dentées rotoriques 51, 52 est faite d'un matériau magnétique ou ferromagnétique et comprend une pluralité de roues dentées 57 disposées le long de l'axe de codeur X. Les roues dentées 57 de chaque composante dentée rotorique 51, 52 sont par exemple espacées le long de cet axe X d'une même distance, par exemple sensiblement égale ou inférieure à la distance d d'espacement des composantes dentées rotorique 51, 52 entre elles. Toutes les roues dentées 57 présentent par exemple sensiblement une même épaisseur. Ainsi, le long de l'axe de codeur X, les roues dentées 57 présentent un profil longitudinal denté défini par un pas P1 caractérisé par l'épaisseur des roues 57, l'espacement entre ces roues 57 ainsi que par la hauteur de chaque dent dans une coupe longitudinale passant par le centre de ces roues 57. Avantageusement, les roues 57 présentent une même hauteur de chaque dent dans chaque coupe longitudinale passant par le centre de ces roues 57.

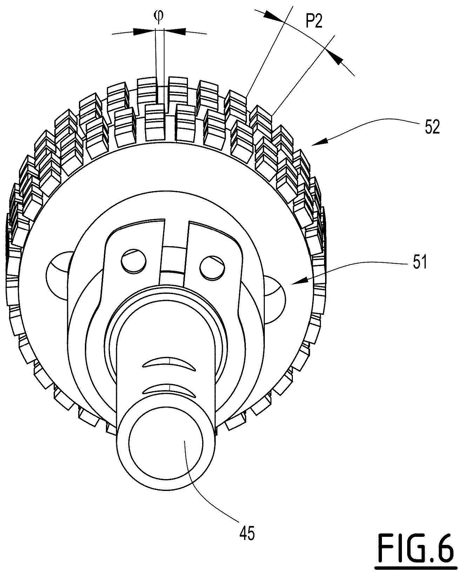

Chaque roue dentée 57 forme en outre une pluralité de dents disposées de manière circonférentielle vers l'extérieur de cette roue, selon par exemple un même pas angulaire P2. Chaque roue dentée 57 comprend par exemple un même nombre de dents disposées de manière circonférentielle. Ces dents sont par exemple de mêmes dimensions. Ainsi, chaque roue dentée 57 forme un même profil circonférentiel denté. Dans l'exemple de la figure 6, le nombre de dents de chaque roue dentée 57 est égal à 32. Cela forme un pas angulaire P2 égal à 11.25°.

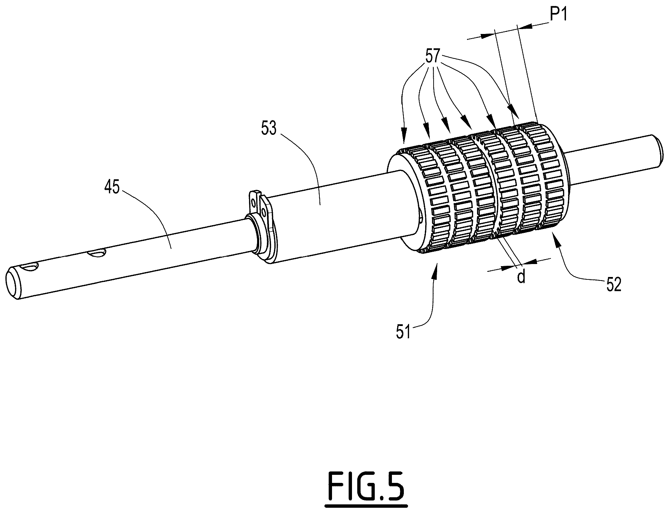

Dans l'exemple de la figure 5, chaque composante dentée rotorique 51, 52 comprend trois roues dentées 57. Ainsi, chaque composante dentée rotorique 51, 52 comprend une roue centrale et une paire de roues périphériques. En outre, au sein d'une même composante dentée rotorique 51, 52, les roues dentées 57 sont avantageusement disposées de manière synchrone, i.e. en phase, le long de l'axe de codeur X. Autrement dit, dans ce cas, chaque dent d'une roue dentée 57 est alignée le long de l'axe de codeur X avec une autre dent d'une roue dentée adjacente 57 au sein d'une même composante dentée rotorique 51, 52. Au contraire, entre les différentes composantes dentées rotoriques 51, 52, les roues dentées 57 sont déphasées d'un angle de déphasage prédéterminé φ comme cela est visible sur la figure 6. Cet angle prédéterminé φ est par exemple une proportion du pas angulaire P2. Cette proportion est par exemple égale à ¼. Ainsi, dans l'exemple de la figure 6, cet angle φ peut être sensiblement égal à 2.8125°.

En revenant à la description de la figure 4, les éléments internes fonctionnels du corps fixe 22 comprennent une composante dentée statorique 61, 62 pour chaque composante dentée rotorique 51, 52 et des moyens de fixations 64 permettant de fixer les composantes dentées statoriques 61, 62 pour former le stator 41 tel qu'expliqué précédemment. En particulier, les moyens de fixation 64 permettent de fixer de manière immobile chacune des composantes dentées statoriques 61, 62 en regard de la composante dentée rotorique 51, 52 lui correspondant, au moins dans une position de repos du codeur 10.

Dans l'exemple de la figure 4, les moyens de fixation 64 comprennent un flasque d'écartement 67 permettant d'écarter les composantes dentées statoriques 61, 62 le long de l'axe de codeur X selon par exemple la distance d et une ou plusieurs flasques de fixation 68 analogues à la flasque 43 telle que décrite précédemment. Les moyens de fixation 64 comprennent en outre une pluralité de vis longitudinales (ou tiges filetées avec écrous) 69 s'étendant selon l'axe de codeur X pour assembler les flasques de fixation 68, la flasque d'écartement 67 et chacune des composantes dentées statoriques 61, 62 le long de l'axe de codeur X. À cet effet, chaque flasque 67, 68 et chaque composante dentée statorique 61, 62 peut définir des orifices en regard permettant le passage de l'une des vis longitudinales 69. Les flasques de fixation 68 peuvent être faits d'un matériau non-magnétique comme par exemple aluminium ou plastique. La flasque 67 est avantageusement fait d'un matériaux magnétiques ou ferromagnétique car le flux magnétique, identifié sur la figure 3, la traverse pour passer de la pièce 61 à la pièce 62. Bien entendu, les moyens de fixation 64 peuvent être mis en œuvre sous toute autre forme convenable.

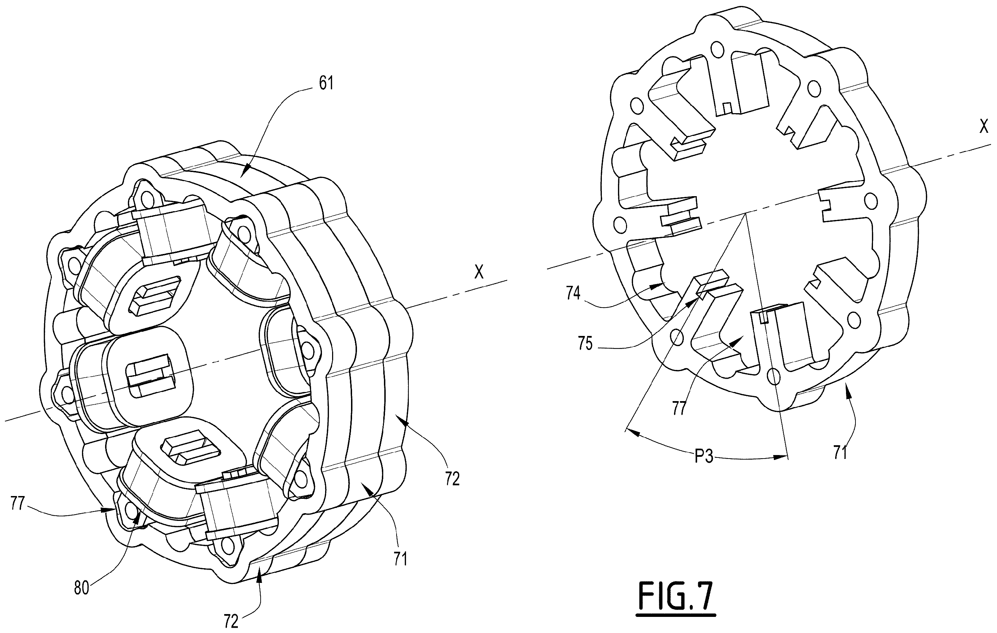

Les composantes dentées statoriques 61, 62 sont par exemple sensiblement analogues entre elles. Le passage des vis ou tiges filetées 69 dans les orifices correspondant assure ainsi un alignement des dents statoriques 61, 62. Ainsi, par la suite, seule la composante dentée statorique 61 sera décrite en détail en référence à la figure 7.

Ainsi, comme cela est illustré sur la partie gauche de cette figure 7, la composante dentée statorique 61 comprend une roue centrale 71 et une paire de roues périphériques 72 adjacentes des côtés opposés de la roue centrale 71 suivant l'axe de codeur X. Comme cela est visible sur la partie droite de la figure 7, la roue centrale 71 définit une pluralité de dents 74 disposées vers l'intérieur de cette roue 71. Les dents 74 sont regroupées pour former des paires. Ces paires sont disposées de manière circonférentielle et sont espacées entre elles de manière homogène d'un même pas angulaire P3 suivant la direction circonférentielle. En particulier, dans l'exemple de la figure 7, la roue centrale 71 définit 8 paires de dents 74 disposées de façon homogène suivant la direction circonférentielle. Chaque paire de dents 74 est formée de deux dents s'étendant le long de l'axe de codeur X et séparées entre elles d'une cavité 75 s'étendant également selon l'axe de codeur X. Ainsi, le roue centrale 71 définit un profil circonférentiel denté.

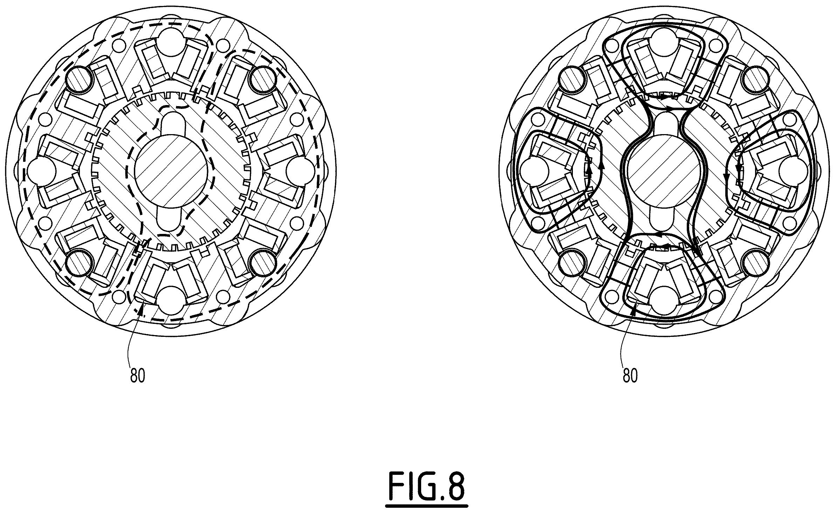

Chaque paire de dents 74 est configurée pour recevoir une bobine magnétique 80 de sorte que les enroulements de cette bobine magnétique 80 s'étendent autour de cette paire de dents 74, c'est-à-dire autour d'un axe radial raccordant le centre de la roue centrale 71 avec sa périphérie. Pour ce faire, les paires de dents 74 définissent entre elles des interstices 77. Chaque interstice 77 est configuré pour recevoir deux moitiés de bobines magnétiques 80 s'étendant autour des paires de dents 74 adjacentes sans que ces bobines se touchent entre elles. Ainsi, dans l'exemple de la figure 7, 8 bobines magnétiques disposées selon la direction circonférentielle sont représentées. Selon certains exemples de réalisation, les bobines magnétiques 80 peuvent être noyées dans un fluide. Chaque bobine magnétique 80 peut présenter un enroulement de fils, par exemple de cuivre émaillé.

Les roues périphériques 72 sont disposées de part et d'autre de la roue centrale 71 de sorte à isoler les extrémités saillantes des bobines magnétiques 80 de la partie extérieure du stator 41. Autrement dit, l'épaisseur de l'assemblage des roues périphériques 72 et de la roue centrale 71 correspond sensiblement à l'extension longitudinale des bobines magnétiques 80.

Chacune des roues centrale 71 et périphériques 72 est avantageusement formée par un empilement de plaques ou de feuilles faites d'un matériau magnétique ou ferromagnétique. Cela permet de réduire les courants de Foucault pour optimiser les performances et réduire la consommation et donc avoir un meilleur rendement.

Les composantes dentées statoriques 61, 62 sont configurés pour être au moins partiellement en face des composantes dentées rotoriques 51, 52 lors de chaque mouvement du rotor 33 selon chaque direction de codage C1, C2. En particulier, par exemple dans une position de repos, les roues centrales 71 des composantes dentées statoriques 61, 62 sont disposées en regard des roues centrales 57 correspondantes des composantes dentées rotoriques 51, 52. Dans une position « push » ou « pull » du rotor 33, les roues centrales 71 des composantes dentées statoriques 61, 62 sont disposées en regard des roues périphériques 57 correspondantes des composantes dentées rotoriques 51, 52. Dans chacune de ces positions, les roues centrales 71 des composantes dentées statoriques 61, 62 sont donc disposées en regard des roues dentées 57 des composantes dentées rotoriques 51, 52. **Il** est de même lorsque le rotor 33 est tourné par rapport au stator 41.

Ainsi, chaque roue centrale 71 des composantes dentées statoriques 61, 62 est destinée à coopérer magnétiquement avec l'une des roues dentée 57 des composantes dentées rotoriques 51, 52 en fonction de la position longitudinale du rotor 33. En outre, les profils circonférentiels dentés de ces roues 71, 57 sont synchronisés. Autrement dit, dans un tel cas, chaque dent de la ou de chaque composante dentée rotorique 51, 52 se trouve dans une même phase avec la dent lui correspondant de la composante dentée statorique 61, 62.

Les bobines magnétiques 80 sont configurées pour être alimentées de sorte à créer un couple et/ou un effort de crantage lors du mouvement du rotor 33 par rapport au stator 41 et/ou pour détecter et quantifier chaque mouvement du rotor 33 par rapport au stator 41.

En particulier, pour créer un couple et/ou un effort de crantage, les bobines magnétiques 80 peuvent être alimentées par un courant constant de sorte que deux groupes de bobines 80 forment des polarités opposées comme cela est illustré dans la partie gauche de la figure 8. Cette alimentation pour le crantage peut être supprimée ou réduite (mise en veille) lorsque le codeur 10 n'est pas utilisé afin de ne pas consommer de l'énergie inutilement dans les phases repos. De plus, ce dispositif permet aussi de faire varier l'alimentation des bobines pour modifier le crantage en fonction du contexte d'utilisation du codeur (exemple couple important lors d'un réglage fin et couple très faible type potentiomètre lors d'un réglage grossier) ou pour générer un retour haptique (par exemple : faire vibrer suivant la direction C1 et/ou la direction C2 lors d'une erreur d'utilisation ou un temps d'attente trop long ou pour confirmer une saisie...).

Le mode d'alimentation illustré sur la partie gauche de la figure 8 forme un flux magnétique, dit flux long. Alternativement, il est possible d'alimenter les bobines magnétiques 80 selon un mode d'alimentation à flux court sur deux bobines magnétiques 80 adjacentes, comme cela est représenté dans la partie droite de la figure 8.

Le nombre de crans selon chaque direction de codage est défini en fonction des profils longitudinal/circonférentiels dentés correspondants. En particulier, selon la direction longitudinale, le nombre de crans est défini par le profil longitudinal denté du rotor 33. Dans l'exemple des figures, ce nombre est égal à 3 ce qui permet d'assurer les fonctionnalités « push » et « pull » du codeur 10. Selon la direction circonférentielle, le nombre de crans est défini par les profils circonférentiels dentés correspondants. Lorsque ces profils sont synchronisés, le nombre de crantages circonférentiels est défini par le nombre maximal de dents de ces profils (i.e. du rotor ou du stator). Ainsi, dans l'exemple des figures, le nombre de crantages circonférentiels est égal à 32 étant donné que le profil circonférentiel denté de chaque roue dentée 57 des composantes dentées rotoriques 51, 52 définit 32 dents. Lorsque les profils circonférentiels dentés sont déphasés (c'est-à-dire lorsque les dents d'une roue sont déphasées par rapport aux dents d'une autre roue disposée en regard de cette première roue), le nombre de crantages peut être multiplié par un facteur m correspondant au nombre de phases différentes définies par ces profils circonférentiels.

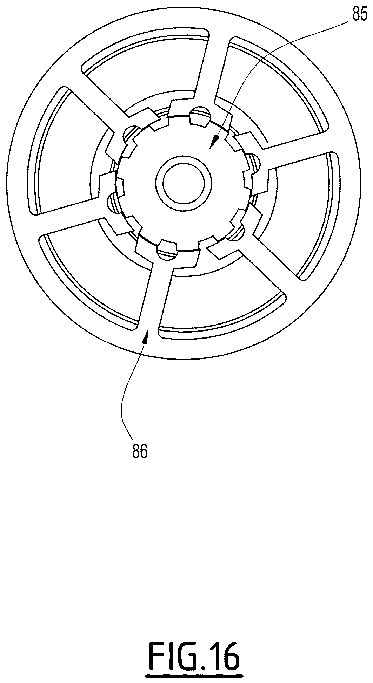

Un exemple de profils circonférentiels dentés déphasés est illustré sur la figure 16. Dans cet exemple, une roue dentée 85 montée sur le rotor 33 présente 10 dents espacées régulièrement et une roue dentée 86 montée sur le stator 41 présente 6 paires de dents espacées régulièrement et forme trois phases différentes en regard des dents du rotor 10. Dans un tel cas, le nombre de crantages circonférentiels est égal à 30.

Pour quantifier chaque mouvement du rotor 33 par rapport au stator 41, les bobines magnétiques 80 sont configurées pour détecter des variations d'inductance créées par le déplacement mutuel des dents des différentes roues dentées. Avantageusement, le nombre de ces variations détectables par les bobines magnétiques 80 correspond à celui de crans selon chaque direction de codage. En outre, la présence de plusieurs composantes dentés rotoriques et statoriques (deux dans l'exemple des figures) permet d'effectuer deux détections dans chaque direction de codage et de déterminer le sens de mouvement selon chaque direction de codage. En particulier, la détection du sens de rotation est rendue possible par le déphasage des roues dentées 57 entre les différentes composantes dentées rotoriques. En outre, un profil longitudinal spécifique peut être utilisé pour détecter le sens de mouvement selon la direction longitudinale.

Pour assurer la détection des variations d'inductance, selon un exemple de réalisation, les bobines magnétiques 80 sont alimentées par des signaux tests constitués de courants périodiques de forme, de phase et fréquences particulières (à plus hautes fréquences gamme 1kHz - 1Mhz) qui sont superposés au courant d'alimentation des bobines piloté en basse fréquence et au courant continu réalisant les pics de couple/effort périodiques du crantage. La position du rotor 33 peut ainsi être déterminée par un traitement spécifique du signal.

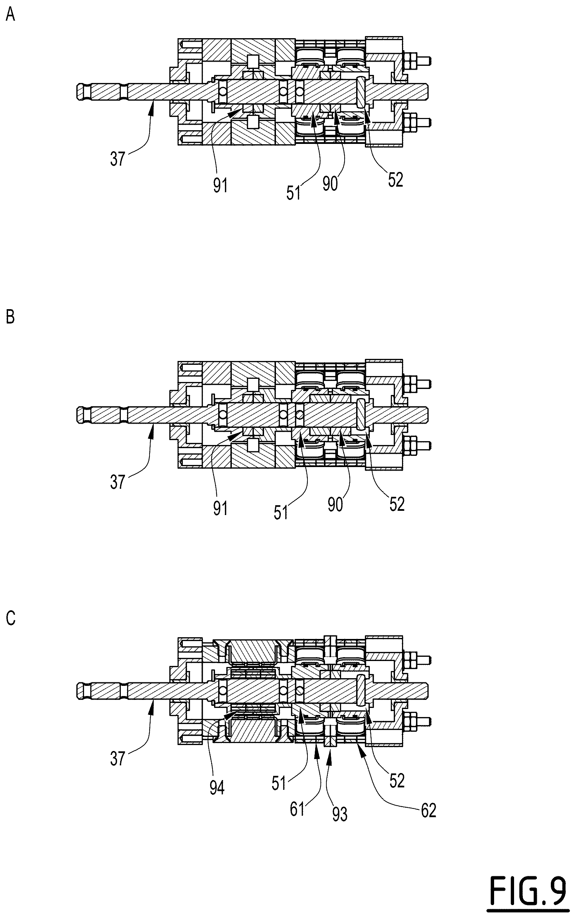

Dans certains exemples de réalisation, le codeur 10 peut comprendre en outre des moyens de crantage supplémentaires qui sont indépendants des bobines magnétiques 80 telles qu'expliquées précédemment. Il peut par exemple s'agit de moyens passifs formés d'une ou de plusieurs aimants permanents. La figure 9 illustre différents exemples de tels moyens de crantage supplémentaires.

Ainsi, dans l'exemple A de cette figure 9, au moins un aimant permanent 90 entre les composantes dentées rotoriques 51, 52 est ajouté pour augmenter les efforts et les couples de crantage en translation et en rotation. La largeur de l'aimant permanent 90 peut être doublée pour former un aimant permanent 92 tel que représenté dans l'exemple B de la même figure 9..

En outre, dans les exemples A et B de cette figure 9, un dispositif de crantage en translation supplémentaire 91 est ajouté. Ce dispositif 91 permet d'augmenter significativement l'effort de translation et d'assurer un effort de rappel en position centrale pour éviter l'usage de ressort ou de générer des positions stables en translation. Ce dispositif 91 est préférentiellement passif (pas de bobinage supplémentaire) et est constitué d'un ou de plusieurs aimants permanents. Les profils des dents et/ou des aimants peuvent être spécifiques pour assurer un profil de force à sensation tactile améliorée. Ce dispositif additionné est réalisé avec des pièces magnétiques ou ferromagnétiques pour assurer des boucles de fermeture magnétique. Le dispositif de crantage 91 peut être constitué d'un aimant 91 ajouté en regard dans un système à dentures (2 dents au rotor et 2 dents au stator équivaut aux flasques 68 mais en matériaux magnétique ou ferromagnétique). Ce dispositif avec rappel magnétique évite l'usage de ressort de rappel en position centrale.

Dans l'exemple C de la figure 9, un aimant permanent 93 est ajouté entre les composantes dentées statoriques 61, 62. En outre, dans cet exemple, le dispositif de crantage tel qu'expliqué précédemment peut comprendre une pluralité d'aimants 94 avec des pôles magnétiques alternants peuvent être ajoutés sur le stator 41 et le rotor 33 dans leur partie entre l'une des composantes dentées rotoriques 51, 52 et les paliers 37 pour former 1 à 3 positions stables et des rappels magnétiques (comme dans le cas précédent) et éviter l'usage de ressort mécanique.

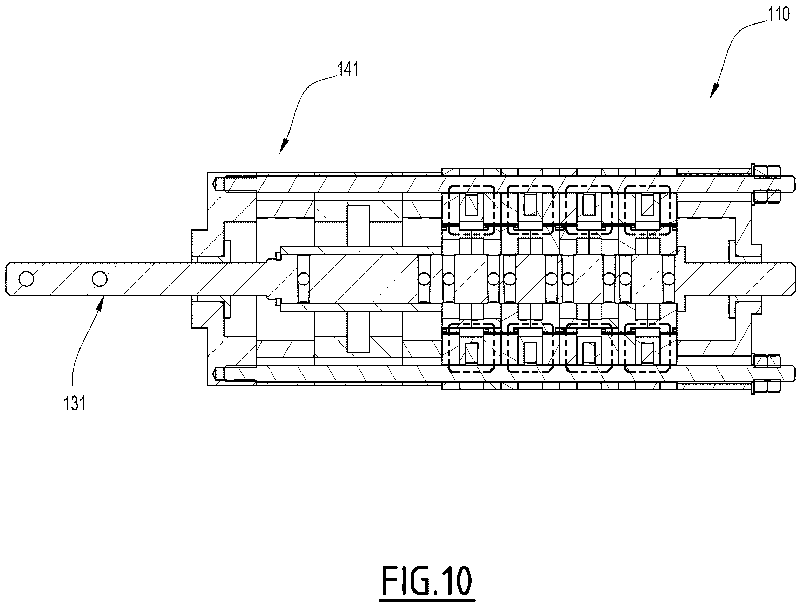

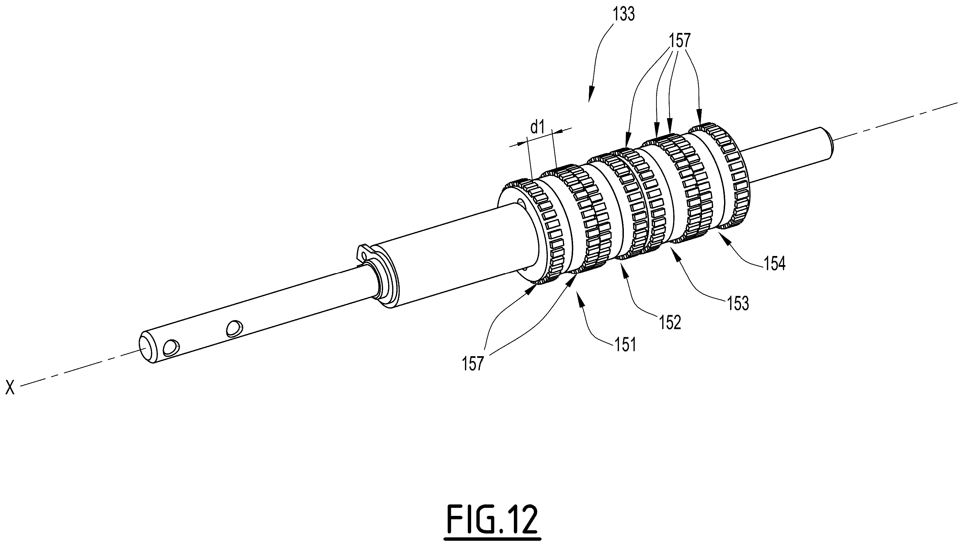

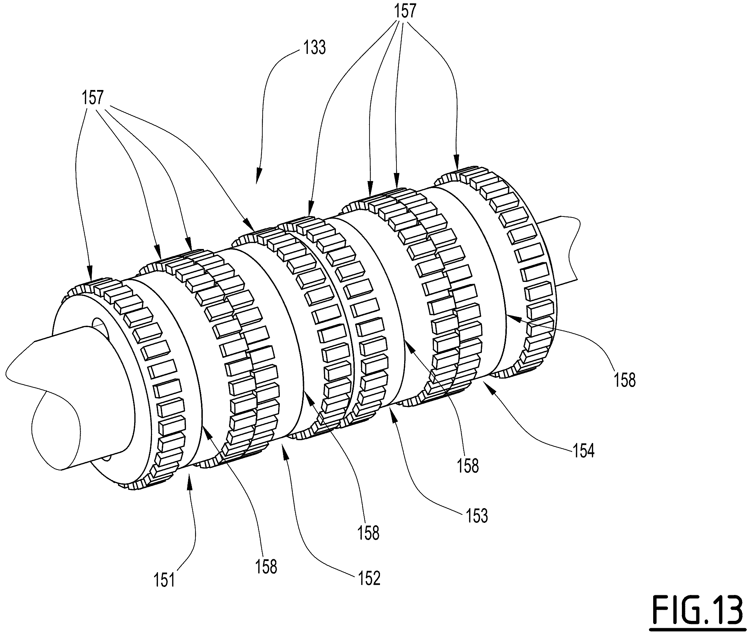

Les figures 10 à 15 illustrent un codeur magnétique incrémental 110 selon un deuxième mode de réalisation de l'invention. Ce codeur 110 est sensiblement analogue à celui décrit précédemment et est notamment destiné à être intégré au moins partiellement dans le panneau 12, comme cela est illustré sur la figure 1.

En outre, comme cela est illustré sur la figure 10, le codeur 110 définit un rotor 133 et un stator 141 analogues à ceux expliqués précédemment. Seules des caractéristiques différenciant du premier mode de réalisation de ces éléments seront expliqués ci-dessous.

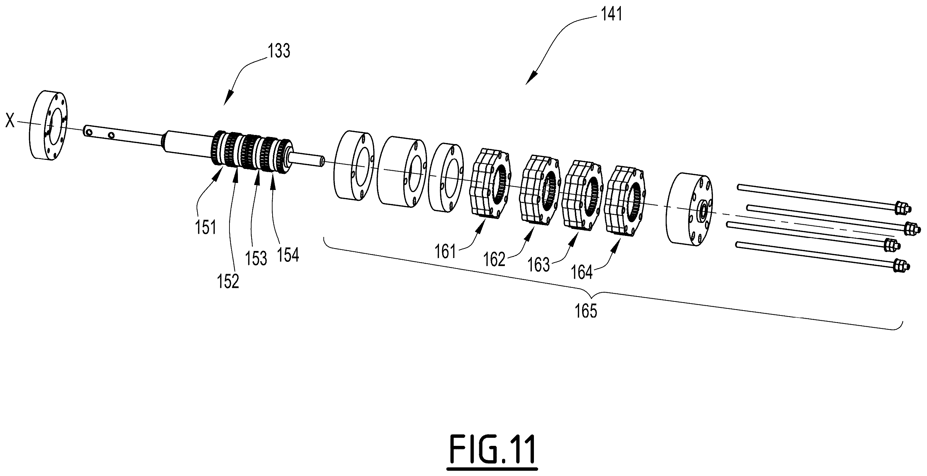

En particulier, en référence aux figures 11 à 13, le rotor 133 définit une pluralité de composantes dentées rotoriques 151 à 154 (quatre dans l'exemple des figures) disposées le long de l'axe de codeur X. Chaque composante dentée rotorique 151 à 154 comprend une paire de roues dentées 157 espacées entre elles par un espace 158 d'épaisseur d1. Chaque roue dentée 157 est par exemple analogue à la roue dentée 57 des composantes dentées rotoriques 51, 52 décrite en relation avec le premier mode de réalisation. En particulier, chaque roue dentée 157 peut définir le même nombre de dents que la roue dentée 57 décrite précédemment. Les roues dentées 157 d'une même composante dentée rotorique 151 à 154 sont synchronisées (i.e. leurs dents sont alignées selon l'axe de codeur X) et les roues dentées 157 de composantes dentées rotoriques 151 à 154 adjacentes sont déphasées d'un angle de déphasage prédéterminé. Cet angle de déphasage peut être sensiblement égal à l'angle de déphasage φ décrit en relation avec le premier mode de réalisation.

Comme cela est visible sur la figure 11, le stator 141 comprend une composante dentée statorique 161 à 164 pour chaque composante dentée rotorique 151 à 154 et des moyens de fixation 165 de ces composantes dentées statoriques 161 à 164. Les moyens de fixation 165 sont par exemple sensiblement analogues à ceux décrits précédemment et comprennent notamment des flasques, des vis, etc. Les composantes dentées statoriques 161 à 164 peuvent ainsi être alignées le long de l'axe de codeur X.

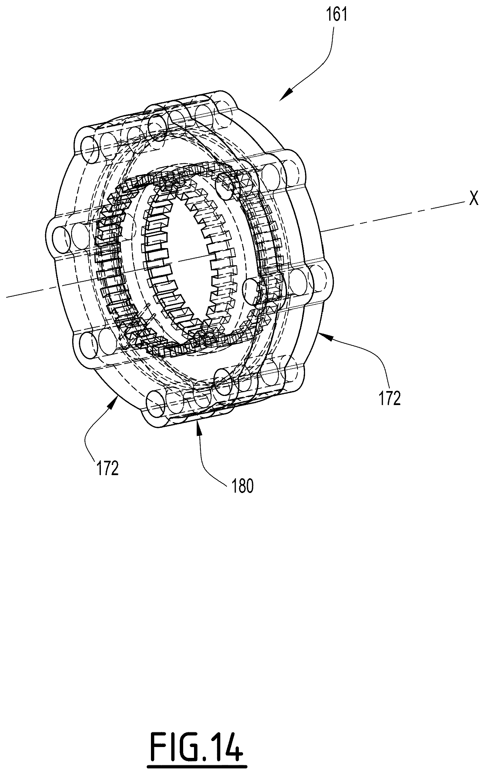

Les composantes dentées statoriques 161 à 164 sont agencées l'une à côté de l'autre le long de l'axe de codeur X pour recevoir les composantes dentées rotoriques 151 à 154 respectives lorsque le codeur 110 est dans sa position de repos. Ces composantes dentées statoriques 161 à 164 sont par exemple sensiblement analogues entre elles et seule la composante dentée statorique 161 sera décrite en détail en référence à la figure 14.

Ainsi, comme cela est illustré sur la figure 14, la composante dentée statorique 161 comprend une bobine magnétique 180 et une paire de roues dentées périphériques 172 disposées axialement avec la bobine magnétique 180 en emprisonnant cette bobine magnétique 180 entre elles.

Chaque roue dentée périphérique 172 est destinée à être disposée en regard de l'une des roues dentées 157 des composantes dentées rotoriques 151 à 154. En outre, dans l'exemple des figures, chaque roue dentée périphérique 172 est en phase avec chaque roue dentée 157 des composantes dentées rotoriques 151 à 154 et définit par exemple le même nombre de dents.

La bobine magnétique 180 définit un enroulement autour de l'axe de codeur X s'étendant entre les roues dentées périphériques 172. Cette bobine 180 est destinée à être disposée en regard de l'un des espaces 158 des composantes dentées rotoriques 151 à 154. Son épaisseur est donc sensiblement égale à *d1.*

Comme dans le mode de réalisation précédent, les bobines magnétiques 180 sont configurées pour être alimentées de sorte à créer un couple et/ou un effort de crantage lors du mouvement du rotor 133 par rapport au stator 141 et/ou pour détecter et quantifier chaque mouvement du rotor 133 par rapport au stator 141, et cela selon chaque direction de codage.

En particulier, selon ce mode de réalisation, une seule détection est réalisée par chaque direction de codage. Cette détection peut être mise en œuvre de manière analogue à celle expliquée précédemment. En outre, le sens de rotation peut être déterminé grâce à l'angle de déphasage φ entre les roues dentées 157 des différentes composantes dentées rotoriques 151 à 154. Le sens de mouvement selon l'axe de codeur X peut être déterminé en utilisant un profil longitudinal denté spécifique selon cet axe X et/ou les détections réalisées par les différentes bobines magnétiques 180 compte tenu de leurs positions respectives le long de l'axe de codeur X.

En ce qui concerne les couples de crantage, une alimentation spécifique des bobines magnétiques 180 permet de créer 32 crans selon la direction circonférentielle et jusqu'à 4 crans selon la direction longitudinale. Cette alimentation pour le crantage peut être supprimée ou réduite (mise en veille) lorsque le codeur 110 n'est pas utilisé afin de ne pas consommer de l'énergie inutilement dans les phase repos. De plus, ce dispositif permet aussi de faire varier l'alimentation des bobines pour modifier le crantage en fonction du contexte d'utilisation du codeur (exemple couple important lors d'un réglage fin et couple très faible type potentiomètre lors d'un réglage grossier) ou pour générer un retour haptique (par exemple : faire vibrer suivant la direction C1 et/ou la direction C2 lors d'une erreur d'utilisation ou un temps d'attente trop long ou pour confirmer une saisie...).

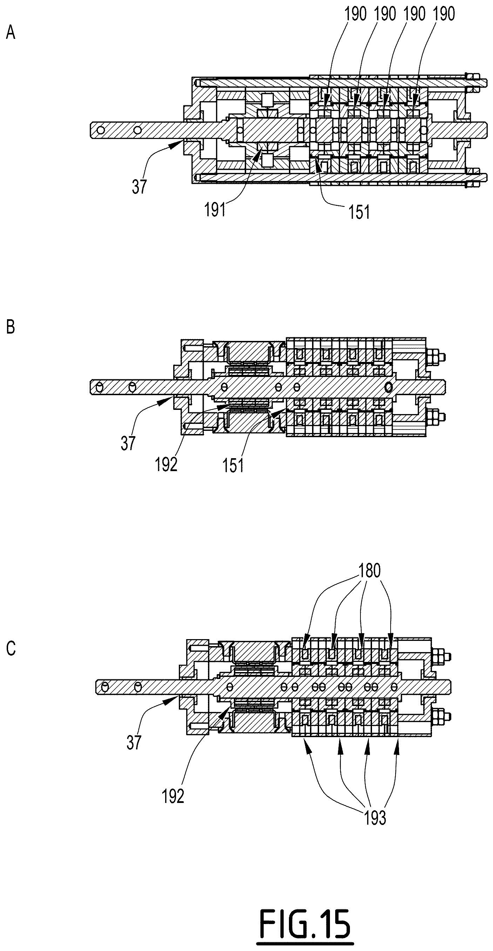

Enfin, comme dans le cas précédent, dans certains exemples de réalisation, le codeur 110 peut comprendre en outre des moyens de crantage supplémentaires qui sont indépendants des bobines magnétiques 180 telles qu'expliquées précédemment. Il peut par exemple s'agit de moyens passifs formés d'une ou de plusieurs aimants permanents. La figure 15 illustre différents exemples de tels moyens de crantage supplémentaires.

Ainsi, dans l'exemple A de cette figure 15, un aimant permanent 190 est ajouté dans chaque espace 158 formé entre un couple de roues dentées 157 des composantes dentées rotoriques 151 à 154, pour augmenter les efforts et les couples de crantage en translation et en rotation.. En outre, un aimant 191 peut être ajouté en regard dans un système à dentures (2 dents au rotor et 2 dents au stator équivaut aux flasques 68 mais en matériau magnétique ou ferromagnétique). Afin de former un crantage axial et des efforts de rappel en position stable du push/pull. Cela évite l'usage de ressort mécanique.

En outre, dans les exemples B et C de cette figure 15, un dispositif de crantage en translation supplémentaire 192 est ajouté. Ce dispositif 192 permet d'augmenter significativement l'effort de translation et d'assurer un effort de rappel en position centrale pour éviter l'usage de ressort ou de générer des positions stables en translation. Ce dispositif 192 est préférentiellement passif (pas de bobinage supplémentaire) et est constitué d'une pluralité d'aimants permanents. Les profils des dents et/ou des aimants peuvent être spécifiques pour assurer un profil de force à sensation tactile améliorée. Ce dispositif additionné est réalisé avec des pièces magnétiques ou ferromagnétiques définissant des pôles magnétiques alternants, pour assurer des boucles de fermeture magnétique. Ces pièces magnétiques sont ajoutées sur le stator 141 et le rotor 133 dans leur partie entre la composantes dentée rotorique 151 et les paliers 37. Ce dispositif avec rappel magnétique évite l'usage de ressort de rappel en position centrale.

Dans l'exemple C de la figure 15, un aimant permanent 193 est ajouté entre les carcasses de chaque bobine magnétique 180.

## Revendications

1. Codeur magnétique incrémental (10 ; 110) définissant un axe de codeur (X) et comprenant un corps fixe et un corps mobile par rapport au corps fixe selon au moins une première direction de codage (C1) ;
l'un des corps, dit premier corps (21), comprenant :
- une première composante dentée (51 ; 151) s'étendant selon une direction longitudinale confondue avec l'axe de codeur (X) et une direction circonférentielle perpendiculaire à la direction longitudinale, l'une desdites directions correspondant à la première direction de codage (C1), la première composante dentée (51 ; 151) définissant une pluralité de dents faites en matériau magnétique ou ferromagnétique et disposées selon la première direction de codage (C1) ;
l'autre corps, dit deuxième corps (22 ; 122), comprenant :
- une deuxième composante dentée (61 ; 161) s'étendant selon la direction longitudinale et la direction circonférentielle, la deuxième composante dentée (61 ; 161) définissant une dent faite en matériau magnétique ou ferromagnétique et disposée en regard des dents de la première composante dentée (51 ; 151) lors de chaque déplacement du corps mobile selon la première direction de codage (C1) ;
- au moins une paire de bobines magnétiques (80 ; 180) configurée pour mesurer chaque variation d'inductance entre la première composante dentée (51 ; 151) et la deuxième composante dentée (61 ; 161), pour quantifier chaque mouvement du corps mobile selon la première direction de codage (C1) ;
les bobines magnétiques (80 ; 180) étant configurées en outre pour être alimentées lors du fonctionnement du codeur (10 ; 110), pour créer un couple ou un effort de crantage entre la première composante dentée (51 ; 151) et la deuxième composante dentée (61 ; 161) lors de chaque mouvement respectif de ces composantes selon la première direction de codage (C1).

2. Codeur (10 ; 110) selon la revendication 1, dans lequel les dents de la première composante dentées (51 ; 151) sont disposées selon la première direction de codage (C1) selon un pas constant.

3. Codeur (10 ; 110) selon la revendication 1 ou 2, dans lequel :
- la première direction de codage (C1) correspond à la direction circonférentielle ;
- la deuxième composante dentée (61 ; 161) comprend une pluralité de dents disposées selon la direction circonférentielle en regard des dents de la première composante dentée (51 ; 151) de manière synchrone ou déphasée.

4. Codeur (10 ; 110) selon l'une quelconque des revendications précédentes, dans lequel le corps mobile est mobile par rapport au corps fixe selon en outre une deuxième direction de codage (C2) perpendiculaire à la première direction de codage (C1) ;
la première composante dentée (51 ; 151) définissant en outre une pluralité de dents faites en matériau magnétique ou ferromagnétique et disposées selon la deuxième direction de codage (C2) ;
la deuxième composante dentée (61 ; 161) définissant une dent faite en matériau magnétique ou ferromagnétique et disposée en regard des dents de la première composante dentée (51 ; 151) lors de chaque déplacement du corps mobile selon la deuxième direction de codage (C1) ;
au moins une paire de bobines magnétiques (80 ; 180) étant configurée pour mesurer chaque variation d'inductance entre la première composante dentée (51 ; 151) et la deuxième composante dentée (61 ; 161), pour quantifier chaque mouvement du corps mobile selon la deuxième direction de codage (C2).

5. Codeur (10 ; 110) selon l'une quelconque des revendications précédentes, dans lequel la première composante dentée (51 ; 151) comprend une pluralité de roues dentées (57 ; 157) disposées selon l'axe de codeur (X).

6. Codeur (10 ; 110) selon la revendication 5, dans lequel les roues dentées (57 ; 157) sont espacées entre elles pour former une pluralité de dents selon l'axe de codeur (X).

7. Codeur (10 ; 110) selon la revendication 5 ou 6, dans lequel la deuxième composante dentée (61 ; 161) comprend au moins une roue dentée (71 ; 172) disposée de manière coaxiale avec au moins une roue dentée (57 ; 157) de la première composante dentée (51 ; 151) au moins dans une position de repos du codeur (10 ; 110).

8. Codeur (10) selon la revendication 7, comprenant une pluralité de bobines magnétiques (80) disposées de manière circonférentielle sur la roue dentée (71) de la deuxième composante dentée (61) ;
de préférence, chaque bobine magnétique (80) s'étendant autour d'une paire de dents formées par la roue dentée (71) de la deuxième composante dentée (61).

9. Codeur (110) selon la revendication 7, dans lequel :
- la deuxième composante dentée (161) comprend au moins deux roues dentées (172) disposées le long de l'axe de codeur (X) ;
- au moins une bobine magnétique (180) est disposée entre lesdites roues dentées (172) de la deuxième composante dentée (161) et s'étend autour de l'axe de codeur (X).

10. Codeur (10 ; 110) selon l'une quelconque des revendications précédentes, comprenant au moins deux premières composantes dentées (51 ; 151) disposées selon l'axe de codeur (X) et au moins deux deuxièmes composantes dentées (61 ; 161) disposées de manière coaxiale avec les premières composantes dentées (51 ; 151).

11. Codeur (10 ; 110) selon la revendication 10, dans lequel :
- chaque premier composante dentées (51 ; 151) comprend au moins une roue dentée (57 ; 157) ;
- les roues dentées (51 ; 151) correspondant à des premières composantes dentées (51 ; 151) différentes sont déphasées d'un angle prédéterminé.

12. Codeur (10 ; 110) selon l'une quelconque des revendications précédentes, dans lequel les bobines magnétiques (80 ; 180) sont configurées pour être alimentées lors du fonctionnement du codeur (10 ; 110), pour créer un couple ou un effort de crantage entre la première composante dentée (51 ; 151) et la deuxième composante dentée (61 ; 161) lors de chaque mouvement respectif de ces composantes selon une deuxième direction de codage (C2).

13. Codeur (10 ; 110) selon la revendication 12, dans lequel les bobines magnétiques (80 ; 180) sont configurées pour être alimentées en fonction d'un contexte d'utilisation du codeur (10 ; 110) ou pour générer un retour haptique.

14. Codeur (10 ; 110) selon la revendication 12 ou 13, dans lequel le nombre de crans selon une direction de codage (C1, C2) est déterminé par le nombre de dents de la première composante dentée (51 ; 151)ou de la deuxième composante dentée (61 ; 161) selon cette direction de codage (C1, C2).

15. Codeur (10 ; 110) selon l'une quelconque des revendications 12 à 14, comprenant en outre un ou plusieurs aimants permanents disposés pour renforcer le couple et/ou l'effort de crantage et/ou générer un couple et/ou un effort de retour.
